# EUROPEAN PATENT APPLICATION

(11) **EP 4 120 461 A1**
(43) Date of publication of application: **18.01.2023**
(21) Application number: 22165711.7
(22) Date of filing: 30.03.2022
(51) Int. Cl.: H01M 50/463, H01M 50/531, H01M 50/533, H01M 50/536, H01M 10/42, H01M 10/0585, H01M 10/0525

(54) **BATTERY CELL AND ELECTRONIC DEVICE**

(30) Priority: 14.07.2021 CN 202110796186
(71) Applicant: Ningde Amperex Technology Ltd., Ningde City, Fujian 352100 (CN)
(72) Inventor: ZHOU, Hua, Ningde City, Fujian Province, 352100 (CN)
(74) Representative: Icosa

(57) **Abstract**

A battery cell (100) includes an electrode assembly (10) and a first conductive unit (20) . The electrode assembly (10) includes a plurality of first electrode plates (11) , a plurality of second electrode plates (12) , and a separator (13) . The plurality of first electrode plates (11) and the plurality of second electrode plates (12) are alternately stacked. The separator (13) includes a first separator (131) and a plurality of second separators (132) . Along a thickness direction of the electrode assembly (10) , the plurality of first electrode plates (11) are located on one side of the first separator (131) . One of the second separators (132) is disposed between each pair of adjacent first electrode plate and second electrode plate. The first separator (131) includes a body portion (1311) and a protection portion (1312) protruding from an edge of the body portion (1311) .The protection portion (1312) overlays the first conductive unit (20) .

## Description

### TECHNICAL FIELD

This application relates to the technical field of batteries, and in particular, to a battery cell and an electronic device.

### BACKGROUND

Lithium-ion batteries have become the first-choice power supply of consumer portable electronic products. With the rapid development of mobile communications devices and multimedia devices, people are posing strict requirements on the safety performance of lithium-ion batteries used in such devices.

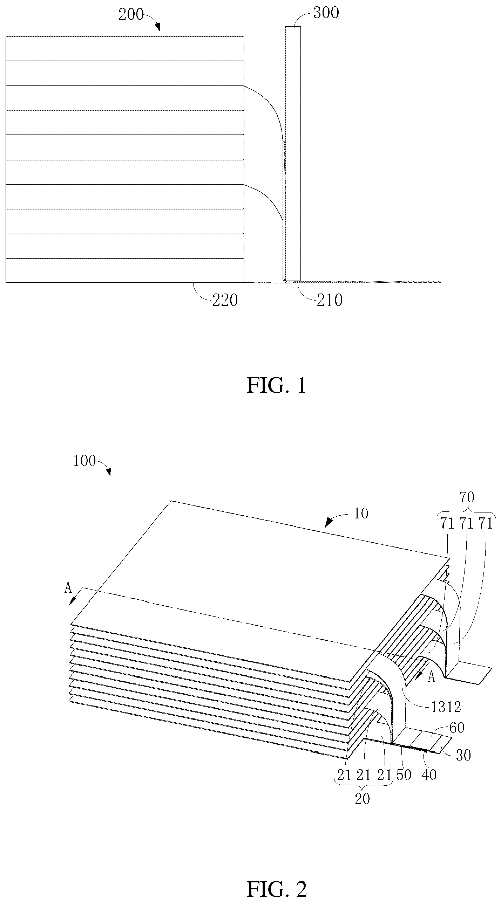

As shown in FIG. 1, in a production process of a battery 200 in the prior art, a tab shaping hold-down bar 300 holds down the tab 210, and abuts against a part of the tab 210. Consequently, the working position of an adhesive applicator interferes with the working position of the tab shaping hold-down bar 300, the adhesive applicator is unable to apply adhesive to a part of the tab 210, and then the part of the tab 210 is exposed in the packaging bag. The exposed part of the tab 210 is prone to pierce the packaging bag and then cause corrosion of the battery, and results in safety hazards.

### SUMMARY

A main objective of the embodiments of this application is to provide a battery cell and an electronic device, and design a separator to prevent a first conductive unit from piercing a packaging bag, so as to improve safety of the battery cell.

To achieve the foregoing objective, a technical solution put forward in an embodiment of this application is:

According to one aspect, a battery cell is provided. The battery cell includes an electrode assembly. The electrode assembly includes a plurality of first electrode plates, a plurality of second electrode plates, and a separator. The plurality of first electrode plates and the plurality of second electrode plates are alternately stacked. The separator includes a first separator and a plurality of second separators. Along a thickness direction of the electrode assembly, the plurality of first electrode plates are located on one side of the first separator. One of the plurality of second separators is disposed between each pair of adjacent first electrode plate and second electrode plate. The battery cell further includes a first conductive unit. The first conductive unit comprises a first section, a second section, and a first bend section. The first section is connected to the plurality of first electrode plates. The first bend section is connected to the first section and the second section. The first separator includes a body portion and a protection portion protruding from an edge of the body portion. The protection portion overlays the first section, the first bend section, and at least a part of the second section. The foregoing disposition prevents the first conductive unit from piercing the packaging bag, reduces the safety hazards caused by corrosion of the battery, improves safety performance of the battery cell, and achieves structural simplicity and cost-effectiveness.

In some embodiments, the first conductive unit includes a plurality of first tabs. One end of each of the first tabs is connected to the corresponding first electrode plate, and the other ends of the first tabs are stacked together and bent to form the first section, the second section, and the first bend section. In this way, by stacking and bending the plurality of first tabs, the solution disclosed herein makes the first conductive unit occupy a smaller space, thereby helping to increase the energy density of the battery cell.

In some embodiments, each of the first electrode plates includes a first current collector and a first active material layer disposed on a surface of the first current collector. Each of the first tabs and the first current collector are integrally formed. In this way, the connection between the first tab and the first current collector is more reliable, thereby avoiding the burrs problem caused when the fixing is implemented by welding. In addition, it is avoided that a blank foil region is reserved for welding the first tab, thereby helping to improve the energy density of the battery cell.

In some embodiments, the protection portion and the body portion of the first separator are integrally formed, thereby making the connection more reliable between the protection portion and the body portion, avoiding the unstable connection caused when the fixing is implemented by means such as bonding, reducing process steps, and improving production efficiency.

In some embodiments, a binder is disposed on a side that is of the protection portion of the first separator facing the first conductive unit. The protection portion is fixed to the first conductive unit by the binder by bonding. In this way, the protection portion as a whole is fixed relative to the first conductive unit, thereby preventing the protection portion from warping or detaching or the like when the protection portion untightly overlays the first conductive unit, and preventing partial exposure of the first conductive unit that occurs consequently.

In some embodiments, the battery cell further includes a first adapter piece. The first adapter piece is connected to the second section to form a first connecting portion. The first adapter piece is configured to implement an electrical connection between the battery cell and an external circuit, so as to allow conversion of chemical energy inside the battery cell into electrical energy for outputting outward, or conversion of external electrical energy into chemical energy for storing inside the battery cell.

In some embodiments, the battery cell further includes a first insulation tape and a second insulation tape. The first insulation tape is disposed on a side that is of the first conductive unit facing away from the protection portion, and overlays the first section, the first bend section, the second section, and the first connecting portion, so as to prevent the packaging bag from being pierced by the sides that are of the first section, the first bend section, the second section, and the first connecting portion facing away from the protection portion. The second insulation tape is disposed on a side that is of the first conductive unit facing the protection portion, and overlays at least the first connecting portion, so as to prevent the packaging bag from being pierced by the side that is of the first connecting portion which faces the protection portion. In this way, the first conductive unit and the first connecting portion can be well protected, and the hazards of piercing the packaging bag are reduced.

In some embodiments, an end that is of the protection portion away from the body portion is fixed to the second insulation tape by bonding. In this way, the protection portion as a whole is fixed relative to the first conductive unit, thereby preventing the protection portion from warping or detaching from the first conductive unit when the protection portion untightly overlays the first conductive unit, and preventing partial exposure of the first conductive unit that occurs consequently.

In some embodiments, an end that is of the first insulation tape towards the electrode assembly is fixed to the electrode assembly by bonding. In this way, the coverage area of the first insulation tape is increased to prevent exposure of the first section and effectively prevent detachment of the first insulation tape.

In some embodiments, an outermost layer of the battery cell is the first separator or the second electrode plate. The first electrode plate is a negative electrode plate, and the second electrode plate is a positive electrode plate.

According to another aspect, an electronic device is provided. The electronic device includes the battery cell described above.

In the battery cell according to the embodiments of this embodiment, the protection portion is disposed at the side edge of the first separator. The protection portion prevents the first conductive unit from piercing the packaging bag due to exposure, reduces the safety hazards caused by corrosion of the battery, improves safety performance of the battery cell, and achieves structural simplicity and cost-effectiveness.

### BRIEF DESCRIPTION OF DRAWINGS

One or more embodiments are described exemplarily with reference to accompanying drawings corresponding to the embodiments. The exemplary description does not constitute any limitation on the embodiments. Components marked with the same reference numeral in the drawings represent similar components. Unless otherwise specified, the drawings do not constitute any scale limitation.
FIG. 1 is a schematic diagram of a fit between a tab and a tab shaping hold-down bar in a production process of a battery in the prior art;
FIG. 2 is a three-dimensional structural diagram of a battery cell according to an embodiment of this application;
FIG. 3 is a sectional view of the battery cell shown in FIG. 2 and sectioned along an A-A direction, in which a zigzag line means that a part of length of an electrode assembly of the battery cell is omitted;
FIG. 4 is a partial schematic structural diagram of FIG. 3, in which a protection portion, a first adapter piece, a first connecting portion, a first insulation tape, and a second insulation tape are omitted;
FIG. 5 is a partial enlarged view of part A of the battery cell shown in FIG. 3;
FIG. 6 is a schematic structural diagram of a battery cell according to another embodiment of this application, in which a zigzag line means that a part of length of an electrode assembly of the battery cell is omitted; and
FIG. 7 is a schematic structural diagram of a battery cell according to still another embodiment of this application, in which a zigzag line means that a part of length of an electrode assembly of the battery cell is omitted.

### DETAILED DESCRIPTION OF EMBODIMENTS

For ease of understanding this application, the following describes this application in more detail with reference to drawings and specific embodiments. It needs to be noted that an element referred to herein as "fixed to" or "mounted to" another element may directly exist on the other element, or may be fixed to the other element through one or more intermediate elements. An element referred to herein as "connected to" another element may be connected to the other element directly or through one or more intermediate elements. A direction or a positional relationship indicated by the terms such as "upper", "lower", "in", "out", "vertical", and "horizontal" used herein is a direction or positional relationship based on the illustration in the drawings, and is merely intended for ease or brevity of describing this application, but does not indicate or imply that the indicated device or component must be located in the specified direction or constructed or operated in the specified direction. Therefore, such terms are not to be understood as a limitation on this application. In addition, the terms "first" and "second" are merely used for descriptive purposes, but shall not be construed as indicating or implying relative importance.

Unless otherwise defined, all technical and scientific terms used herein have the same meanings as what is generally understood by a person skilled in the technical field of this application. The terms used in the specification of this application are merely intended to describe specific embodiments but not to limit this application. The term "and/or" used herein is intended to include any and all combinations of one or more related items preceding and following the term.

In addition, the technical features described below and mentioned in different embodiments of this application may be combined with each other so long as they do not conflict with each other.

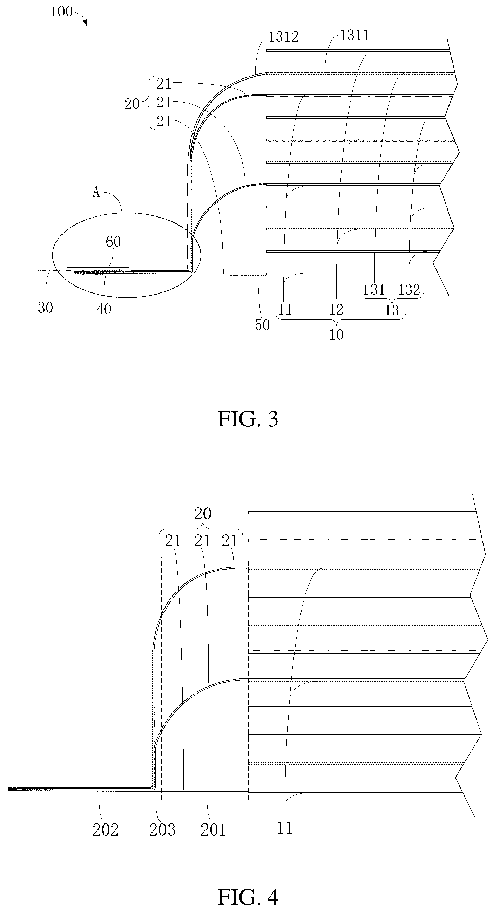

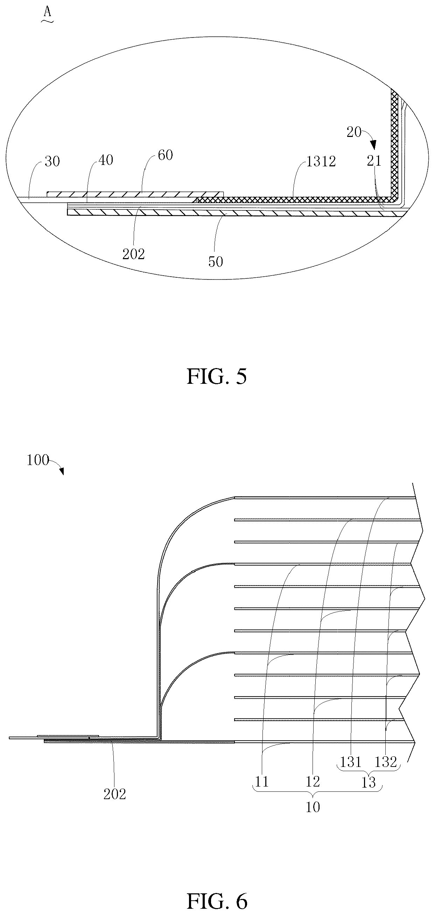

Refer to FIG. 2, FIG. 3, FIG. 4, and FIG. 5. FIG. 2 is a three-dimensional structural diagram of a battery cell 100 according to an embodiment of this application. FIG. 3 is a sectional view of the battery cell 100 shown in FIG. 2 and sectioned along an A-A direction. FIG. 4 is a partial schematic structural diagram of FIG. 3. FIG. 5 is a partial enlarged view of part A of the battery cell 100 shown in FIG. 3.

It needs to be noted that, as shown in FIG. 1, in a production process of a battery 200 in the prior art, the working position of a tab shaping hold-down bar 300 of a device interferes with the working position of an adhesive applicator, and the tab shaping hold-down bar 300 abuts against an end that is of a tab 210 towards an electrode 220. Consequently, the adhesive applicator is unable to apply insulation tape to the end that is of the tab 210 towards the electrode 220, or to a surface that is of the end which faces the tab shaping hold-down bar 300. After completion of shaping the tab 210 and applying the tape, the end that is of the tab 210 towards the electrode 220, and the surface that is of the end which faces the tab shaping hold-down bar 300, are exposed. The exposed part is prone to pierce the packaging bag and then cause corrosion of the battery 200, and results in safety hazards.

As shown in FIG. 2 to FIG. 7, this application provides a battery cell 100. The battery cell 100 includes an electrode assembly 10 and a first conductive unit 20. The first conductive unit 20 is connected to the electrode assembly 10.

The electrode assembly 10 includes a plurality of first electrode plates 11, a plurality of second electrode plates 12, and a separator 13. The plurality of first electrode plates 11 and the plurality of second electrode plates 12 are alternately stacked. The separator 13 includes a first separator 131 and a plurality of second separators 132.

The first conductive unit 20 contains a first section 201, a second section 202, and a first bend section 203. The first section 201 is connected to the plurality of first electrode plates 11. The first bend section 203 is connected to the first section 201 and the second section 202.

The first separator 131 includes a body portion 1311 and a protection portion 1312 protruding from an edge of the body portion 1311. The protection portion 1312 overlays the first section 201, the first bend section 203, and at least a part of the second section 202.

Along a thickness direction of the electrode assembly 10, the plurality of first electrode plates 11 are located on one side of the first separator 131. One of the second separators 132 is located between each pair of adjacent first electrode plate 11 and second electrode plate 12. To be specific, along the stacking direction of the first electrode plates 11 and the second electrode plates 12, all the first electrode plates 11 connected to the first conductive unit 20 are located on the same side of the first separator 131, so as to allow the protection portion 1312 of the first separator 131 to overlay the first section 201, the first bend section 203, and at least a part of the second section 202 of the first conductive unit 20 on the same side.

In the battery cell 100 provided in this embodiment of this application, all the first electrode plates 11 are disposed on one side of the first separator 131, and the first separator 131 contains a protection portion 1312 protruding from the edge. In this way, before the first conductive unit 20 abuts against the tab shaping hold-down bar 300, the protection portion 1312 has overlaid an end that is of the first conductive unit 20 towards the first electrode plate 11, and has overlaid a surface that is of the end which faces the tab shaping hold-down bar 300. This avoids the following problem: When the working positions interfere with each other, the adhesive applicator is unable to apply insulation tape to the end that is of the first conductive unit 20 towards the first electrode plate 11, or to the surface that is of the end which faces the tab shaping hold-down bar 300. Consequently, a part of the first conductive unit 20 is exposed. The solution disclosed herein prevents corrosion of the battery caused by the first conductive unit 20 piercing the packaging bag, reduces safety hazards, improves safety performance of the battery 100, and achieves structural simplicity and cost-effectiveness.

Understandably, the term "overlay" referred to herein means that, in the length and width directions of an overlaid object, the overlaid object is overlaid with the overlayer. In other words, in the thickness direction of the overlaid object, the overlaid object falls within a projection region of the overlayer. As shown in FIG. 3 and FIG. 4, along the length direction and the width direction of the first conductive unit 20, the protection portion 1312 overlays the first section 201, the first bend section 203, and at least a part of the second section 202. In other words, in the width direction of the first conductive unit, the edge of the protection portion 1312 extends beyond the edge of the first conductive unit 20; in the length direction of the first conductive unit 20, the protection portion 1312 extends from the body portion 1311 and extends to at least the second section 202; and, in the thickness direction of the electrode assembly, the projections of the first section 201, the first bend section 203, and at least a part of the second section 202 fall within the projection of the protection portion 1312. The width direction of the first conductive unit 20 points vertically to the paper surface of FIG. 3.

In a specific implementation process, the protection portion 1312 may be fixedly connected to the body portion 1311 by bonding, integrally forming, or the like. However, the manner of fixed connection between the protection portion 1312 and the body portion 1311 is not limited to the examples given above.

In some embodiments of this application, the protection portion 1312 and the body portion 1311 are integrally formed, thereby making the connection more reliable between the protection portion 1312 and the body portion 1311, avoiding the unstable connection caused when the fixing is implemented by means such as bonding, reducing process steps, and improving production efficiency.

In some embodiments of this application, a binder (not shown in the drawing) is disposed on a side that is of the protection portion 1312 which faces the first conductive unit 20. The protection portion 1312 is fixed to the first conductive unit 20 by the binder by bonding. In this way, the protection portion 1312 as a whole is fixed relative to the first conductive unit 20, thereby preventing the protection portion from warping or detaching or the like when the protection portion 1312 untightly overlays the first conductive unit 20, and preventing partial exposure of the first conductive unit 20 that occurs consequently.

In some embodiments of this application, the binder includes at least one of polypropylene alcohol, polyacrylic acid, polyacrylic acid sodium salt, polyimide, polyamide imide, styrene butadiene rubber, polyvinyl alcohol, polyvinylidene fluoride, polyvinylidene difluoride, polytetrafluoroethylene, polyvinyl butyral, water-based acrylic resin, or sodium carboxymethyl cellulose.

In some embodiments of this application, the electrode assembly 10 is a stacked structure, so that the battery cell 100 is a stacked cell 100. Specifically, as shown in FIG. 3, the plurality of first electrode plates 11, the plurality of second electrode plates 12, the first separator 131, and the plurality of second separators 132 are stacked. Along the thickness direction of the electrode assembly 10, on one side of the electrode assembly 10 (in FIG. 3, the upper side of the electrode assembly 10), an outermost layer of the electrode assembly 10 is the second electrode plate 12, a second-outermost layer of the electrode assembly 10 is the first separator 131, and a third layer of the electrode assembly 10 is the first electrode plate 11. In other words, the first separator 131 is located between the outermost second electrode plate 12 and the first electrode plate 11 adjacent to the first separator (that is, the third layer of the electrode assembly 10 in FIG. 3). To put it differently, just one second electrode plate 12 is disposed on one side of the first separator 131, and the remaining second electrode plates 12 and all the first electrode plates 11 are disposed on the other side of the first separator. Each of the second separators 132 is located between one of the remaining second electrode plates 12 and a first electrode plate adjacent. In this way, the first separator 131 is closer to the outer surface of the electrode assembly 10 than the first electrode plate 11. Therefore, the protection portion 1312 of the first separator 131 can overlay the first conductive unit 20 from the outside of the first electrode plate 11, thereby preventing safety hazards caused by the exposure of the first conductive unit 20.

In some other embodiments of this application, referring to FIG. 6, FIG. 6 is a schematic structural diagram of a battery cell 100 according to another embodiment of this application. The plurality of first electrode plates 11, the plurality of second electrode plates 12, the first separator 131, and the plurality of second separators 132 are stacked. Along the thickness direction of the electrode assembly 10, on one side of the electrode assembly 10 (in FIG. 6, the upper side of the electrode assembly 10), the outermost layer of the electrode assembly 10 is the first separator 131, the second-outermost layer of the electrode assembly 10 is the second electrode plate 12, the third layer of the electrode assembly 10 is the second separator 132, and the fourth layer of the electrode assembly 10 is the first electrode plate 11. In other words, the first separator 131 is disposed on the outermost layer of the electrode assembly 10 and used as an outer surface of the electrode assembly 10; a plurality of first electrode plates 11, a plurality of second electrode plates 12, and a plurality of second separators 132 are all located on a side that is of the first separator 131 which faces the inside of the electrode assembly; and one of the second separators 132 is located between each pair of adjacent first electrode plate 11 and second electrode plate 12. In this way, the first separator 131 serves as the outer surface of the electrode assembly 10. On the one hand, the protection portion 1312 of the first separator 131 can overlay the first conductive unit 20 from the outside of the first electrode plate 11, thereby preventing safety hazards caused by the exposure of the first conductive unit 20. On the other hand, the first separator 131 serving as the outer surface of the electrode assembly 10 can serve a cushioning function during the dropping of the battery cell 100, thereby improving safety of the battery cell.

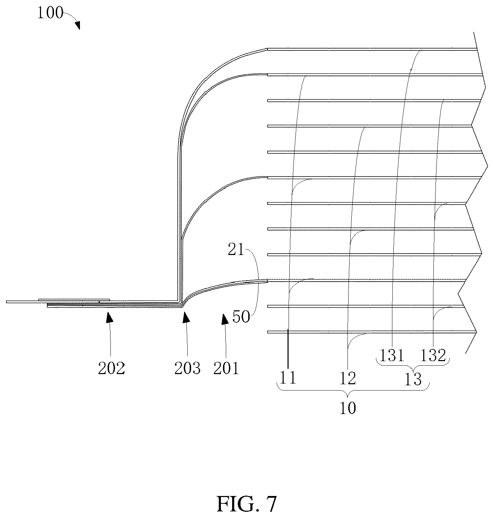

Understandably, in the foregoing embodiment, when the outermost layer of the electrode assembly 10 is the first separator 131, the second-outermost layer of the electrode assembly 10 may be the first electrode plate 11 instead. Referring to FIG. 7, FIG. 7 is a schematic structural diagram of a battery cell 100 according to still another embodiment of this application. The plurality of first electrode plates 11, the plurality of second electrode plates 12, the first separator 131, and the plurality of second separators 132 are stacked. Along the thickness direction of the electrode assembly 10, on one side of the electrode assembly 10 (in FIG. 7, the upper side of the electrode assembly 10), the outermost layer of the electrode assembly 10 is the first separator 131, the second-outermost layer of the electrode assembly 10 is the first electrode plate 11, and the third layer of the electrode assembly 10 is the second separator 132. In other words, the first separator 131 is used as an outer surface of the electrode assembly 10; a plurality of first electrode plates 11, a plurality of second electrode plates 12, and a plurality of second separators 132 are all located on a side that is of the first separator 131 which faces the inside of the electrode assembly; and One of the second separators 132 is located between each pair of adjacent first electrode plate 11 and second electrode plate 12. In this way, the first separator 131 serves as the outer surface of the electrode assembly 10. The protection portion 1312 of the first separator 131 can overlay the first conductive unit 20 from the outside of the first electrode plate 11 as well, thereby preventing safety hazards caused by the exposure of the first conductive unit 20. On the other hand, the first separator 131 serving as the outer surface of the electrode assembly 10 can serve a cushioning function during the dropping of the battery cell 100, thereby improving safety of the battery cell.

Still referring to FIG. 4, with respect to the first conductive unit 20, the first conductive unit 20 includes a plurality of first tabs 21. One end of each of the first tabs 21 is connected to a corresponding first electrode plate 11, and the other ends of the first tabs 21 are stacked together and bent, so as to form the first section 201, the second section 202, and the first bend section 203 of the first conductive unit 20. In this way, by stacking and bending the plurality of first tabs, the solution disclosed herein makes the first conductive unit occupy a smaller space, thereby helping to increase the energy density of the battery cell 100.

Understandably, with respect to the electrode assembly 10, the first electrode plate 11 includes a first current collector and a first active material layer disposed on the surface of the first current collector, and the second electrode plate 12 includes a second current collector and a second active material layer disposed on the surface of the second current collector. In a specific implementation process, the first tab 21 may be fixedly connected to the first current collector by welding, bonding, integrally forming, or the like. However, the manner of fixed connection between the first tab 21 and the first current collector is not limited to the examples given above.

In some embodiments of this application, the first tab 21 and the first current collector are integrally formed so that the connection between the first tab 21 and the first current collector is more reliable. In this way, the connection between the first tab and the first current collector is more reliable, thereby avoiding the burrs problem caused when the fixing is implemented by welding. In addition, it is avoided that a blank foil region is reserved for welding the first tab 21, thereby helping to increase the energy density of the battery cell 100, reducing process steps, and improving production efficiency.

Still referring to FIG. 3 to FIG. 5, in some embodiments of this application, the battery cell 100 further includes a first adapter piece 30. The first adapter piece 30 is connected to the second section 202 to form a first connecting portion 40. The first adapter piece 30 is configured to implement an electrical connection between the battery cell 100 and an external circuit, so as to allow conversion of chemical energy inside the battery cell 100 into electrical energy for outputting outward, or conversion of external electrical energy into chemical energy for storing inside the battery cell 100.

In a specific implementation process, the first adapter piece 30 may be fixedly connected to the second section 202 by welding, bonding, integrally forming, or the like. However, the manner of fixed connection between the first adapter piece 30 and the second section 202 is not limited to the examples given above.

In some embodiments of this application, the first adapter piece 30 is welded to the second section 202 to form a first connecting portion 40. It needs to be noted that the first adapter piece 30 is fixed to the second section 202 by welding. Therefore, the first connecting portion 40 includes a welding mark formed after welding. The welding mark is prone to pierce the packaging bag.

In some embodiments of this application, the battery cell 100 further includes a first insulation tape 50 and a second insulation tape 60. The first insulation tape 50 is disposed on a side that is of the first conductive unit 20 which faces back from the protection portion 1312, and overlays the first section 201, the first bend section 203, the second section 202, and the first connecting portion 40, so as to prevent the packaging bag from being pierced by the sides that are of the first section 201, the first bend section 203, the second section 202, and the first connecting portion 40 which face back from the protection portion 1312. The second insulation tape 60 is disposed on a side that is of the first conductive unit 20 which faces the protection portion 1312, and overlays at least the first connecting portion 40, so as to prevent the packaging bag from being pierced by the side that is of the first connecting portion 40 which faces the protection portion 1312. In this way, the first conductive unit 20 and the first connecting portion 40 can be well protected, and the hazards of piercing the packaging bag are reduced. In addition, the disposition of the protection portion 1312 can further reduce the hazards of piercing the packaging bag.

Further, the protection portion 1312 and the second insulation tape 60 jointly overlay the side that is of the first conductive unit 20 which faces the protection portion 1312. The foregoing disposition can provide sufficient protection for the first section 201, the first bend section 203, the second section 202, and the first connecting portion 40 located on the second section 202, and prevent the packaging bag from being pierced by the first conductive unit 20 and/or the first connecting portion 40.

In some embodiments of this application, as shown in FIG. 3, the first insulation tape 50 is strip-shaped and disposed on a side that is of the first conductive unit 20 which faces back from the protection portion 1312, and overlays the first section 201, the first bend section 203, and the second section 202, so as to fit a first tab 11 that is strip-shaped and away from the first separator 131.

In some embodiments of this application, as shown in FIG. 7, the first insulation tape 50 is bent and disposed on the side that is of the first conductive unit 20 which faces back from the protection portion 1312, and overlays the first section 201, the first bend section 203, and the second section 202, so as to fit a first tab 11 that is bent and away from the first separator 131.

Understandably, in some embodiments of this application, the first insulation tape 50 can not only overlay the first section 201, the second section 202, and the first bend section 203 of the first conductive unit 20, but also the end that is of the first insulation tape 50 towards the electrode assembly 10 can be fixed to the electrode assembly 10 by bonding, so as to overlay the edge region that is of the electrode assembly 10 towards the first insulation tape 50. In other words, in the thickness direction of the electrode assembly, the projection of the end that is of the first insulation tape 50 towards the electrode assembly 10 partly overlaps the projection of the edge region of the electrode assembly 10. In this way, the coverage area of the first insulation tape 50 is wider, thereby effectively preventing exposure of the first section 201 of the first conductive unit 20 and also preventing detachment of the first insulation tape 50.

In some embodiments of this application, as shown in FIG. 5, the second insulation tape 60 overlays an end that is of the protection portion 1312 which is away from the body portion 1311, and is fixed to the protection portion 1312 by bonding. In this way, the protection portion 1312 as a whole is fixed relative to the first conductive unit 20, thereby preventing the protection portion 1312 from warping or detaching from the first conductive unit 20 when the protection portion untightly overlays the first conductive unit 20, and preventing partial exposure of the first conductive unit 20 that occurs consequently.

In some embodiments of this application, the first electrode plate 11 is a negative electrode plate, and the second electrode plate 12 is a positive electrode plate.

In some other embodiments of this application, the first electrode plate 11 is a positive electrode plate, and the second electrode plate 12 is a negative electrode plate.

In some embodiments of this application, the battery cell 100 further includes a packaging bag. The electrode assembly 10, the first conductive unit 20, and the first adapter piece 30 are all accommodated in the packaging bag. The end that is of the first adapter piece 30 which is away from the first connecting portion 40 extends out of the packaging bag.

Still referring to FIG. 2, in some embodiments of this application, the battery cell 100 further includes a second conductive unit 70. The second conductive unit 70 includes a plurality second tabs 71. One end of each of the second tabs 71 is connected to a corresponding second electrode plate 12, and the other ends of the second tabs 71 are stacked together and bent, so as to form the third section, the fourth section, and the second bend section of the second conductive unit 70. Each of the second tabs 71 is connected to a second current collector of a corresponding second electrode plate 12.

In some embodiments of this application, the number of protection portions 1312 of the first separator 131 is two. One protection portion 1312 overlays the first conductive unit 20, and the other protection portion 1312 overlays the second conductive unit 70.

In some embodiments of this application, the battery cell 100 further includes a second adapter piece, a third insulation tape, and a fourth insulation tape. The second adapter piece is connected to the fourth section to form a second connecting portion. The third insulation tape is disposed on one side of the second conductive unit 70, and overlays the third section, the second bend section, the fourth section, and the second connecting portion. The fourth insulation tape is disposed on the other side of the second conductive unit 70, and overlays at least the second connecting portion.

In some embodiments of this application, the third insulation tape is strip-shaped and disposed on a side that is of the second conductive unit 70 which faces back from the protection portion 1312, and overlays the third section, the second bend section, and the fourth section to fit a second tab 71 that is strip-shaped and away from the first separator 131.

In some other embodiments of this application, the third insulation tape is bent and disposed on the side that is of the second conductive unit 70 which faces the protection portion 1312, and overlays the third section, the second bend section, and the fourth section to fit a second tab 71 that is bent and away from the first separator 131.

In some embodiments of this application, the fourth insulation tape overlays an end that is of a corresponding protection portion 1312 which is away from the body portion 1311, and is fixed to the protection portion 1312 by bonding. In this way, the protection portion 1312 as a whole is fixed relative to the second conductive unit 70, thereby preventing the protection portion 1312 from warping or detaching from the second conductive unit 70 due to untight overlaying of the protection portion, and preventing exposure of the second conductive unit 70 that occurs consequently.

Both the second conductive unit 70 and the second adapter piece are accommodated in the packaging bag. The end that is of the second adapter piece which is away from the second connecting portion extends out of the packaging bag.

An embodiment of this application further provides an electronic device. The electronic device includes the battery cell 100 according to any one of the foregoing embodiments. The electronic device prevents the packaging bag of the battery cell 100 from being pierced by the first conductive unit 20, thereby reducing the fault rate of the electronic device arising from electrolyte leakage and gassing caused by corrosion.

The electronic device according to this application is not particularly limited, and may be any electronic device known in the prior art. In some embodiments of this application, the electronic device may include, but is not limited to, a notebook computer, a pen-inputting computer, a mobile computer, an e-book player, a portable phone, a portable fax machine, a portable photocopier, a portable printer, a stereo headset, a video recorder, a liquid crystal display television set, a handheld cleaner, a portable CD player, a mini CD-ROM, a transceiver, an electronic notepad, a calculator, a memory card, a portable voice recorder, a radio, a backup power supply, a motor, a car, a motorcycle, a power-assisted bicycle, a bicycle, a lighting appliance, a toy, a game console, a watch, a power tool, a flashlight, a camera, a large household storage battery, a lithium-ion capacitor, or the like.

What is described above is merely embodiments of this application, and in no way thereby limits the patent scope of this application. All equivalent structural variations and equivalent process variations made by using the content of the specification and the drawings of this application, and the direct and indirect use of the content in other related technical fields, still fall within the patent protection scope of this application.

## Claims

1. A battery cell (100) , **characterized in that**, the battery cell (100) comprises:
an electrode assembly (10) , wherein the electrode assembly (10) comprises a plurality of first electrode plates (11) , a plurality of second electrode plates (12) and a separator (13) ; the plurality of first electrode plates (11) and the plurality of second electrode plates (12) are alternately stacked; the separator (13) comprises a first separator (131) and a plurality of second separators (132) ; and along a thickness direction of the electrode assembly (10) , the plurality of first electrode plates (11) are located on one side of the first separator (131) , and one of the plurality of second separators (132) is disposed between each pair of adjacent first electrode plate (11) and second electrode plate (12) ; and
a first conductive unit (20) comprising a first section (201) , a second section (202) and a first bend section (203) , wherein the first section (201) is connected to the plurality of first electrode plates (11) , and the first bend section (203) is connected to the first section (201) and the second section (202) ;
wherein, the first separator (131) comprises a body portion (1311) and a protection portion (1312) protruding from an edge of the body portion (1311) ; and the protection portion (1312) overlays the first section (201) , the first bend section (203) and at least a part of the second section (202) .

2. The battery cell (100) according to claim 1, **characterized in that**, the first conductive unit (20) comprises a plurality of first tabs (21) , one end of each of the first tabs (21) is connected to the corresponding first electrode plate (11) , and the other ends of the first tabs (21) are stacked together and bent to form the first section (201) , the second section (202) , and the first bend section (203) .

3. The battery cell (100) according to claim 2, **characterized in that**, each of the first electrode plates (11) comprises a first current collector and a first active material layer disposed on a surface of the first current collector, and each of the first tabs (21) and the first current collector are integrally formed.

4. The battery cell (100) according to claim 1, **characterized in that**, the protection portion (1312) and the body portion (1311) are integrally formed.

5. The battery cell (100) according to claim 1, **characterized in that**, a binder is disposed on a side of the protection portion (1312) facing the first conductive unit (20) , and the protection portion (1312) is fixed to the first conductive unit (20) by the binder by bonding.

6. The battery cell (100) according to claim 5, **characterized in that**, the battery cell further comprises:
a first adapter piece (30) connected to the second section (202) to form a first connecting portion (40) ; and
a first insulation tape (50) and a second insulation tape (60) , wherein the first insulation tape (50) is disposed on a side of the first conductive unit (20) facing away from the protection portion (1312) , and overlays the first section (201) , the first bend section (203) , the second section (202) and the first connecting portion (40) ; and the second insulation tape (60) is disposed on a side of the first conductive unit (20) facing the protection portion (1312) , and overlays at least the first connecting portion (40) .

7. The battery cell (100) according to claim 6, **characterized in that**, an end of the protection portion (1312) away from the body portion (1311) is fixed to the second insulation tape (60) by bonding.

8. The battery cell (100) according to claim 6, **characterized in that**, an end of the first insulation tape (50) towards the electrode assembly (10) is fixed to the electrode assembly (10) by bonding.

9. The battery cell (100) according to claim 1, **characterized in that**, an outermost layer of the battery cell (100) is the first separator (131) or the second electrode plate (12) , the first electrode plate (11) is a negative electrode plate, and the second electrode plate (12) is a positive electrode plate.

10. An electronic device, **characterized in that**, the electronic device comprises
the battery cell (100) according to any one of claims 1 to 9.
